Europäisches Patentamt

European Patent Office

Office européen des brevets

(11) Numéro de publication : **0 418 218 B1**

(12) **FASCICULE DE BREVET EUROPEEN**

(19)

(45) Date de publication du fascicule du brevet :
06.05.92 Bulletin 92/19

(21) Numéro de dépôt : **88901868.5**

(22) Date de dépôt : **19.02.88**

(86) Numéro de dépôt international :
**PCT/FR88/00092**

(87) Numéro de publication internationale :
**WO 89/07547 24.08.89 Gazette 89/20**

(51) Int. Cl.⁵ : **B64C 29/00**

(54) **APPAREIL VOLANT "LE QUADRIPALE HP-01".**

(43) Date de publication de la demande :
**27.03.91 Bulletin 91/13**

(45) Mention de la délivrance du brevet :
**06.05.92 Bulletin 92/19**

(84) Etats contractants désignés :
**DE FR GB IT**

(56) Documents cités :
**FR-A- 1 420 825**
**US-A- 2 955 780**
**US-A- 3 265 329**
**US-A- 3 556 438**

(73) Titulaire : **HARDOIN, Pierre**
**8, Allée Anne-de-Noailles La Ville-aux-Dames**
**F-37700 Saint-Pierre-des-Corps (FR)**

(72) Inventeur : **HARDOIN, Pierre**
**8, Allée Anne-de-Noailles La Ville-aux-Dames**
**F-37700 Saint-Pierre-des-Corps (FR)**

Jouve, 18, rue Saint-Denis, 75001 PARIS

EP 0 418 218 B1

**Description**

Le domaine de l'invention concerne les appareils volants à hélices carénées à axes verticaux selon le préambule de la revendication 1. Un tel appareil est déjà connu (cf. par exemple FR-A-1 420 825).

La présente invention propose, comme décrit plus précisément dans la partie caractérisante de la revendication 1, un tel appareil ayant, en plus, deux hélices carénées à pas fixe et à axe horizontal parallèle à l'axe longitudinal de l'appareil, ces hélices étant montées coulissantes dans un dispositif à double rail à déplacement latéral par rapport à l'appareil et rétractables à l'intérieur de l'appareil, séparément ou simultanément. Cette disposition permet une augmentation de la vitesse en vol de l'appareil par rapport aux appareils connus, ainsi qu'une meilleure maniabilité, cette dernière par opération des deux hélices propulsives additionnelles en mode différentiel comme expliqué plus loin.

Les revendications dépendantes décrivent des modes particuliers de réalisation de la présente invention; la description détaillée qui va suivre et les figures descriptives se réfèrent au mode de réalisation actuellement préféré.

Un exemple de la présente invention réalisée, concerne un prototype d'appareil volant, d'un type nouveau. Possédant de par sa conception, 4 systèmes rotatifs propulsifs, prend, pour déterminer l'appareil, le nom "Quadripales HP 01".

Possédant pour la subtantation, 2 turbines de 2,70 mts à 6 pales chacune. Les 6 pales constituant une turbine, sont toutes à pas variables. Ces pales possèdent par turbine, un système d'ouverture et fermeture, actionné de la cabine de pilotage.

Les 2 turbines subtantatrices de 2,70 mts chacune, sont placées chacune dans leur emplacement, avant et arrière du chassis.

Le chassis est fabriqué en tube d'acier léger de 6,60 mts de long, 2,78 mts de large et 0,680 mt de hauteur chassis, est assemblé par entretoises et soudé. De forme rectangulaire avec embouts arrondis permettant une bonne pénétration dans l'air.

Sont placées, sur chaque côté vertical de l'appareil, une hélice à droite, une hélice à gauche. Ces hélices, de 530 m/m de diamètre à pas fixe, sont à sorties réglables rétractables, dans leurs emplacements dans l'appareil.

Ces hélices sont montées et fixées sur double rails montés sur billes et coulissants. La poussée vers l'extérieur,est effectuée sur chaque bâtit support hélice, entraînée par vis hélicoïdale et moteur électrique 12 volts.

Ces hélices propulsives permettent à l'appareil, sorties de leurs emplacements, d'accélérer la vitesse de l'appareil. Ces hélices peuvent être arrêtées en cours de sortie, extérieurement, soit séparément, sur l'une ou l'autre hélice, suivant l'utilisation.

Un moteur à refroidissement par air est installé au centre du chassis, entre les deux turbines. L'échappement est rendu silencieux par l'installation d'absorbtion des décibels sur la longueur du pot d'échappement.

Ce moteur entraîne les 2 turbines subtantatrices et les 2 hélices propulsives.

D'un poids de 385 kgs, moteur de 80 CV à 5000 t/m, peut voler à la vitesse de 100 km/h, de 1 500 à 2 000 mts d'altitude, avec autonomie de 2 heures.

Pour le roulage au sol, l'appareil possède 4 roulettes réparties sous le chassis.

Cet appareil a la particularité de voler dans des endroits dangereux, de passer dans des chemins en forêt, faire des inspections de lignes HT électriques, des édifices, toutes manoeuvres sans risque.

Sur le plan Militaire, après équipement, faire la chasse aux blindés, faire l'observation ou cibles aériennes.

L'ensemble de l'appareil extérieurement, est caréné, ainsi que les deux turbines à pales subtantatrices surélevées du dessus du chassis, sont également carénées.

De par sa protection, l'appareil ne craint pas les heurts légers qui peuvent se produire autour de l'appareil.

Deux ailerons stabilisateurs, rétractables, sont placés extérieurement sur les côtés longitudinaux de l'appareil. Ces ailerons sont commandés du poste de pilotage et jouent un rôle stabilisateur et directionnel.

Pour les pilotes, un siège se trouve de chaque côté de l'emplacement où se trouve fixé le moteur. Ces sièges sont fixés chacun dans leur emplacement prévu, et sont fixés à la base intérieure du chassis.

Le volant de commande de l'appareil est installé sous le tableau de contrôle de l'appareil, où sont réunies les manettes de contrôle moteur, navigation. Celui-ci est fixé sur le haut du chassis, juste devant le pilote.

Sur le volant de commande se trouvent fixés et placés les 2 interrupteurs de commande séparée, pour la sortie des hélices propulsives, ainsi que la commande de l'ouverture des pales subtantatrices.

Les pilotes se trouvent placés chacun sous une bulle plastique incolore et transparente, dégageant bien la visibilité.

Une moitié de la bulle est amovible permettant la rentrée des pilotes dans leurs cockpits.

L'appareil de forme rectangulaire avec embouts circulaires est constitué dans sa structure en tube d'acier ultra-léger, de diamètre 22 millimètres.

D'une longueur de 6,60 mts extérieur - 2,78 mts de large - 0,68 mt de hauteur de chassis - 1,30 mt hors tout compris roulettes de roulage au sol au haut de la verrière des pilotes.

Des entretoises de diamètre 21 millimètres, sont placées et soudées en croisillons autour de la structure. Ces tubes faisant raidisseur, sont soudés entre eux et renforcés aux jonctions par des tôles soudées.

Le support moteur est placé transversallement au centre de gravité de 1 mètre de large - 2,78 mts de long, constitue l'ensemble du chassis. Ces tubes sont répartis de 0,50 mts de chaque côté du point de gravité.

Ce chassis est donc constitué : 2,78 mts emplacement turbine avant - 2,78 mts turbine arrière - 1,04 mt emplacement au centre, moteur et réducteur y sont fixés. De chaque côté du moteur sur la largeur des 2,78 mts sont placés les pilotes, espace 1 mètre de large - 1,30 mt de long, le moteur et réducteur, 1 mètre et à la droite du moteur, le navigateur espace 0,70 mt.

Sur ce berceau transversal est fixé le berceau moteur et réducteur, surbaissé de 0,20 mt. Cet abaissement permet que la sortie de l'arbre vertical où se trouve la poulie horizontale 4 gorges, soit à la hauteur des poulies de bas d'arbres des turbines.

Le raccordement pour entrainement des poulies turbines à la poulie du réducteur est effectué par 2 courroies trapézoïdales partant de la poulie 4 gorges, soit 2 à gauche et 2 à droite. Les 2 courroies se trouvant sur la deuxième turbine subtantatrice sont croisées pour le sens de marche inverse.

Les 2 turbines subtantatrices droite et gauche sont fixées sur le manchon prévu à cet effet, qui ensuite, ce manchon est fixé sur le bout d'arbre déjà en place et bloqué.

Les embouts circulaires, avant et arrière du chassis 2,78 mts de diamètre, sont coupés en biseau. La coupe partant du devant de la moitié de la hauteur, soit 0,38 mt, pour rejoindre le bas du chassis de la moitié du diamètre des 2,78 mts. Des entretoises en tube ultraléger de 21 M/M soudé sur le demi périmètre des 2,78 mts, maintiennent l'ensemble et renforcent la structure.

Cette coupe de dégagement des embouts avant et arrière permet un meilleur écoulement de l'air poussé par les turbines à 6 pales chacune, tournant à 1 200 T/mn qui sont placées au centre, sur leur arbre dans chaque emplacement d'extrémité à cet effet.

Dans sa surface circulaire de 2,78 mts de diamètre, sont placées à la base du chassis sur la largeur de l'appareil, 7 rangées de volets de 120 m/m de large, fabriqués en tôle dural de 5/10, allant d'un diamètre au centre de 2,50 mts pour se terminer sur 1,30 mt de long aux bords intérieurs de la circonférence. Ces volets en dural sont répartis à distance égale à l'intérieur de la circonférence. Pour éviter la flexion au centre, ces volets sont montés sur charnières et fixés par soudures aux tubes de soutien des turbines.

Ces volets sont sur l'ensemble du pourtour du diamètre, fixés sur un axe dural de 5 m/m, et se trouvant emboutés aux extremités sur un guide soudé sur le chassis. Tous ces volets sont réunis entre eux de façon à avoir, dès la poussée exercée par le pilote sur le bras d'inclinaison fixé au centre de l'ensemble des volets, le même angle d'ouverture.

Ces volets avant et arrière placés dans le sens de la largeur, font avancer ou reculer l'appareil.

6 autres rangées de volets dural de 120 m/m de large, réunis entre eux et placés transversallement, sont fixés à 100 m/m au dessus des 7 autres du dessous.

Le nombre de volets installés dans chaque dessous de turbine étant de 7 volets mobiles placés dans la largeur de l'appareil, plus 6 volets mobiles placés perpendiculairement aux autres volets, ce qui fait 13 volets installés sous les turbines, soit 26 volets pour les deux turbines.

Les rangées de 7 volets soit 14 volets placés dans le sens de la largeur, font avancer ou reculer l'appareil en vol, suivant l'angle de braquage des volets, tous les volets ont un angle de braquage de 90° par rapport à la verticale, 45° à droite et 45° à gauche.

L'air repoussé par les turbines subtantatrices, retombe verticalement sur l'ensemble des volets, qui ces volets orientent la direction de sortie d'air, par la position des volets actionnés par le pilote.

Les 6 volets avant, plus les 6 volets arrière se trouvent sous les turbines sustentatrices. Ils sont placés transversalement et sont à commandes séparées l'une de l'autre.

Ce sont ces volets soit 12 rangs au total qui dirigent l'appareil en vol.

Tout l'ensemble des volets mobiles installés sous les turbines dans les deux sens sont raccordés entre eux et maniables dans les deux sens.

Toutes les rangées de volets sont synchronisées sur les commandes au poste de pilotage.

L'ensemble de ce montage directionnel et propulsion intérieure, permet à l'appareil qui est sur son pourtour caréné, de s'introduire dans les passages justes de sa largeur, sans aucun risque d'accrochage.

Des ailerons stabilisateurs de 300 m/m de long, 180 m/m de large, rabattables, sont fixés au chassis extérieurement sur les côtés droit et gauche de l'appareil, et au centre de la hauteur. Ces ailerons sur axe pivotant, sont actionnés par cable et raccordés sur un levier de commandes installé sur le côté gauche à portée de main, dans la cabine de pilotage. Ces ailerons réglables assurent la stabilité en vol de l'appareil.

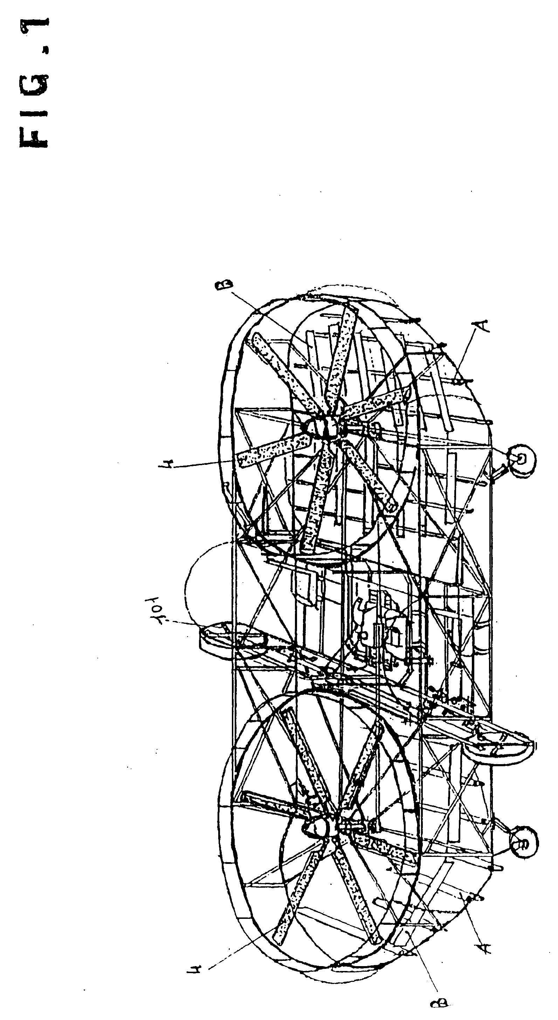

Pour accentuer la vitesse de l'appareil, une propulsion est adjointe en complément. Deux hélices à pas fixe (101) carénées (voir Fig.1), sont à sorties variables et rétractables. Ces hélices, installées à droite et à gauche dans la partie verticale de l'intérieur de l'appareil, entre les deux turbines sustentatrices (4) et placées devant les pilotes, l'axe horizontal étant parallèle à l'axe longitudinal de l'appareil.

Les deux hélices d'un diamètre de 530 m/m à pas fixe, sont placées dans un carénage en tôle dural. Ces hélices sont placées, une à droite, une à gauche, sur plan vertical. Elles sont montées sur rails doubles coulissants, permettant la sortie extérieure et rentrée par voie mécanique dans l'intérieur de l'appareil. Les deux montages sont identiques de chaque côté.

Les rails sont fixés de haut en bas sur la hauteur du chassis soit 680 m/m. Ces rails fixes sont boulonnés sur les tubes acier de las tructure du chassis sur la largeur des 2,78 m. La partie coulissante du rail est fixée sur le montant du soutien hélice.

Ces hélices propulsives (101) rétractables se trouvent encastrées dans la hauteur de 680 m/m et 150 m/m de large. Une plaque plastique sépare et isole les pilotes.

Un emplacement de 160 m/m de large sur 680 m/m de haut, laisse le passage au carénage et hélices propulsives qui glisse sur ces rails en dural qui sont à déplacement latéral par rapport à l'appareil volant, pour rentrer de son diamètre à l'intérieur du chassis.

En bout extérieur des rails est fixé par boulonnage, un tube d'acier léger qui assemble ces deux rails haut et bas. Sur ce tube est fixé le boitier de renvoi d'angle à 90°. Sur ce boitier se trouve l'axe de fixation de l'hélice et l'axe d'entrainement où est fixé à ce bout d'arbre, un flector de jonction à l'arbre principal qui est fixé au boitier central distribuant l'énergie aux deux hélices.

Ce montage sur rails à glissière est identique pour les 2 hélices tractives.

Le boitier central d'entrainement des arbres se compose de 3 pignons dentelés,montés dans l'intérieur du boitier. Ces pignons fixés sur arbre séparé, sont montés sur double roulements qui ces roulements sont encastrés dans les paroies du boitier.

Sur les 2 pignons face à face dans le boitier, se trouvent les sorties d'arbre parallèles où est fixé un flector métallique pour raccordement sur les arbres d'entrainement des hélices.

Le 3ème pignon réunissant les 2 autres, fait inverseur de sens pour une hélice, ceci pour compenser le couple tournant.

Les arbres de raccordement montés à droite et à gauche entre le boitier hélice et le boitier central, se trouvent en deux parties. La première partie de l'arbre est un arbre mâle à rayures extérieur et la deuxième partie femelle à rayures intérieur. Cet arbre femelle partant du flector boitier central. Ces 2 arbres coulissant l'un dans l'autre, permettent à l'hélice tractive de sortiret rentrer suivant les besoins de propulsion de l'appareil.

Le montage et raccordement est identique pour les deux hélices tractrices.

Sur le boitier central entre les 2 hélices, est fixée sur le boitier à la sortie de l'arbre horizontal, la poulie à gorge trapézoïdale qui est raccordéepar courroie à la poulie se trouvant sur le devant du moteur qui entraine lespales subtantatrices.

Les hélices tractices propulsives, tournent à 3 000 t/m.

La sortie des hélices propulsives extérieurement du chassis est effectuée par une vis sans fin à grand pas, avec autour du pas, son manchon monté sur billes qui glisse le long de la vis. Cette vis est fixée en bout sur un roulement qui ensuite est fixé sur le montant du chassis à la hauteur de la base du carénage où se trouve l'hélice. L'extrémité de la vis est raccordée sur le flector du moteur électrique à double sens de marche. Le manchon de la vis est fixé sur le côté du carénage et hélice qui lui, est fixé sur les rails.

Ce manchon dès la mise en marche du moteur, pousse le carénage avec l'hélice en dehors du chassis. Cet ensemble monté sur rails sort de son diamètre, soit 550 m/m à l'extérieur.

Pour rentrer l'ensemble hélice dans son emplacement, il suffit d'inverser l'arrivée du courant au moteur. Celui-ci tourne donc dans l'autre sens de rotation et tout l'ensemble revient en arrière pour se loger à son point de départ.

Le même montage est effectué sur la 2ème hélice. Ces hélices sont indépendantes l'une de l'autre, possèdent chacune leur moteur électrique de sorties.

Ces hélices propulsives indépendantes possèdent chacune leur interrupteur inverseur. Ces interrupteurs sont fixés sur le volant de commandes directionnel qui se trouve au poste de pilotage.

Le pilote peur sortir, ensemble ou séparément, ces hélices suivant le besoin.

Tout ce montage électro-mécanique ne présente aucun danger, permet un avancement dans l'air lentement, avec possibilité de l'ensemble de propulsion de se dégager rapidement d'un endroit dangereux.

La sortie des hélices propulsives peut se faire progressivement ou en cas d'urgence, se faire en 5 secondes. Un régulateur automatique est installé sur le moteur pour éviter la chute du nombre de tours moteur.

Lors de la mise en marche du moteur central, les hélices propulsives tournent immédiatement, elles sont branchées en direct sur le moteur.

Une fois le moteur tournant à 1 500 T/m, le pilote embraye les pales subtantatrices qui sont au point zéro. Le moteur étant à son régime, l'ouverture du pas se fait par le pilote, sur l'interrupteur d'impulsion électrique. (Régime moteur central 5 000 T/m).

L'appareil au sol peut rouler sur ses 4 roulettes, placées et fixées à la base du chassis.

Cet appareil se déplace par ses propres moyens, Le moteur central en marche entraîne les hélices tratrices propulsives qui tournent dans l'intérieur du chassis. La commande de sorties l'hélices est effectuée par le pilote qui agit sur les interrupteurs qui, reliés aux moteurs électriques placés en bout de vis, font tourner la vis, qui, elle, sort l'ensemble de l'hélice. Ces hélices glissent chacune sur leur double rails, ce qui permet cette maniabilité.

Les hélices carénées sortent en tournant de l'intérieur du chassis, l'appareil commence à avancer en roulant. La direction de l'appareil se fait en rentrant progressivement l'hélice à l'intérieur, soit la droite ou la gauche, ce qui freine le côté hélice rentrée.

Une autre possibilité de l'appareil roulant au sol, les pales subtantatrices peuvent être embrayées par le pilote et les pales du point zéro à quelques degrés d'ouverture de pas, donnent l'air nécessaire qui retombant sur les volets à commandes manuelles, du poste de pilotage, oriente les volets pour l'avancement. Cette possibilité complète la poussée des hélices propulsives.

La possibilité de roulage au sol fait véhicule et qui à chaque obstacle, par l'ouverture du pas des pales, passe immédiatement l'obstacle, soit fossé, rivière etc. et reprendre sa place sur route ou chemin.

Tout cet ensemble de traction est entraîné par un moteur central, alimenté en essence et à refroidissement par air.

Ce moteur à refroidissement par air est placé au centre de gravité de l'appareil, Placé dans un emplacement de 1 mt de large et 1 mt de long, ce moteur et réducteur est fixé sur silenbloc au berceau support. L'ensemble d'embrayage sur le moteur et le réducteur à sortie d'arbre à 90° font bloc sur le moteur.

Sur la boite réducteur, se trouve fixée la poulie 4 gorges qui reçoit 4 courroies trapézoïdales, 2 courroies partant et fixées sur la poulie bas de la turbine avant et 2 courroies partant vers la turbine arrière. La poulie 4 gorges se trouve à la même hauteur que la poulie basse d'entrainement des turbines, ce qui fait que le moteur central se trouve surbaissé de 200 m/m du bas du niveau chassis qui est de 680 m/m.

La commande du levier d'embrayage des 2 turbines subtantatrices se trouve placée et fixée dans le poste de pilotage, à la base du chassis. Une biellette fait le raccordement du levier à la fourchette de l'embrayage. Les commandes et contrôle de l'appareil sont placés sur un tableau de bord qui est fixé à la hauteur du haut du chassis, juste devant les pilotes. Le volant de commandes se trouve sous le tableau de bord, au centre.

Le poste de pilotage se trouve à gauche du moteur, le navigateur à droite du moteur. Les sièges des pilotes sont fixés sur la traverse base du chassis transversale.

Dans le côté droit, passe le pot d'échappement silencieux, placé entre le moteur et le siège, Le pot, d'un diamètre de 90 m/m sur 1,30 mt de long, façonné en tôle d'alu, possède sur l'ensemble de sa longueur, un revêtement intérieur en paille de fer, avec collecteur en métal déployé, 3 chicanes sont placées sur la longueur et atténuent le bruit des gaz. Un pot de détente de 150 m/m de diamètre - 230 m/m de haut, est placé à la verticale, 4 chicanes entourées de paille de fer, des plaques de tôle sont soudées dans ce pot de détente, tout cet ensemble assemblé rend la sortie des gaz rélativement silencieuse. Un tube de sortie des gaz sur l'extérieur, est fixé sur le dessus du pot de détente.

Un réservoir d'essence se trouve derrière le navigateur,celui-ci est fixé sur le chassis.

Un robinet d'arrêt d'urgence se trouve placé dans le poste de pilotage à portée de main.

La subtantation est effectuée par 2 turbines à 6 pales, chacune oscillante. Ces turbines sont placées au centre de ces circonférences de 2,78 mts de diamètre, l'espace d'un mt entre les 2 turbines sont placés moteur au centre et pilotes de chaque côté.

L'arbre principal, usiné le 30 m/m de diamètre et 1,50 mt de long, placé au centre de la circonférence et verticalement, reçoit le moyeu en dural de 200 m/m de diamètre et 100 m/m de haut est usiné pour recevoir au centre l'arbre vertical fixé au chassis, et les 6 pales oscillantes montées sur le pourtour du manchon de 200 m/m et réparties à égales distance les unes des autres.

La deuxième turbine est identique à la première, pour l'assemblage et le montage.

Au dessus du manchon se trouve sur l'arbre, tout le système d'ouverture et fermeture de pales à commande électro-mécanique.

Sur la partie avant et arrière de la circonférence, se trouve placé à la verticale, dans le chassis, l'arbre d'entrainement des turbines.

Cet arbre central a, à sa base, à 90 m/m du bout d'arbre où se trouve la poulie d'entrainement de la turbine, un roulement qui, lui, reçoit une cage enveloppant ce roulement. Cette cage de 110 m/m de diamètre, 50 m/m d'épaisseur, est percée, au centre, pour le passage de l'arbre et a, sur ses côtés, réparties à égale distance autour de cette cage, 6 plaques soudées. Ces plaques soudées horizontalement sont percées chacune de 2 trous pour fixation sur les tubes qui sont soudés au chassis.

Les fixations de la cage sont raccordées aux 6 tubes d'acier léger qui sont soudés aux extrémités sur le chassis. La fixation des tubes à la cage est effectuée par 2 boulons d'assemblage placés sur chaque patte. Ces boulons de fixation permettent le démontage de l'arbre central et de sa turbine.

Sur la partie supérieure de l'arbre principal, se trouve placée à 480 m/m au dessus du roulement inférieur, une cage avec son roulement (ce roulement se trouve sous le manchon en dural) qui reçoit les 6 pales oscillantes subtantatrices. Cette cage avec ses plaques soudées a la même fixation que la partie inférieure.

La partie de fixation inférieure est fixée sur la partie basse du chassis (la structure en acier représentant le chassis de 680 m/m de haut).

La partie de fixation supérieure est fixée sur la partie haute du chassis, soit la fixation par soudure des tubes de soutien de la rage au tube haut du chassis des 680 m/m de haut.

Les 6 tubes d'acier inférieurs maintenant le roulement bas de l'arbre central et les 6 tubes d'acier supérieurs maintenant le roulement supérieur de l'arbre central, sont perpendiculaires du dessus au dessous.

La même fixation est effectuée pour l'arbre principal de la deuxième turbine subtantatrice.

Les pales subtantatrices fixées sur manchons acier orientables, sont placées dans une circonférenre de 2,70 mts.

Sur les bords de la circonférence constituée par le chassis, est fixé un carénage en plastique d'une hauteur de 200 m/m et développé sur l'ensemble du périmètre des 2,78 mts.

Les pattes de soutien en métal, sont soudées, espacées sur le pourtour du périmètre. Le plastique de 15/10 d'épaisseur, est fixé sur les pattes de soutien, renforcé par l'extérieur d'un feuillard acier de 10 m/m de large et 5/10 d'épaisseur. Tout cet ensemble est fixé par rivets sur les soutiens tout autour du périmètre.

Ce carénage plastique permet d'envelopper l'air aspiré par les turbines et le maintenir dans ce diamètre verticalement allant directement sur les volets.

La nécessité de ce carénage de 200 m/m de haut, autour du périmètre à l'emplacement où se trouve les pales, est que les pales subtantatrices étant surélevées de 100 m/m au dessus du chassis auraient perdu leur efficacité à agir sur les volets mobiles, se trouvant fixés à la base des circonférences.

Les 2 turbines étant identiques, elles ont le même montage et efficacité.

Fonctionnement et montage de la tête de commande d'ouverture du pas des pales, d'une des deux turbines installée sur l'appareil.

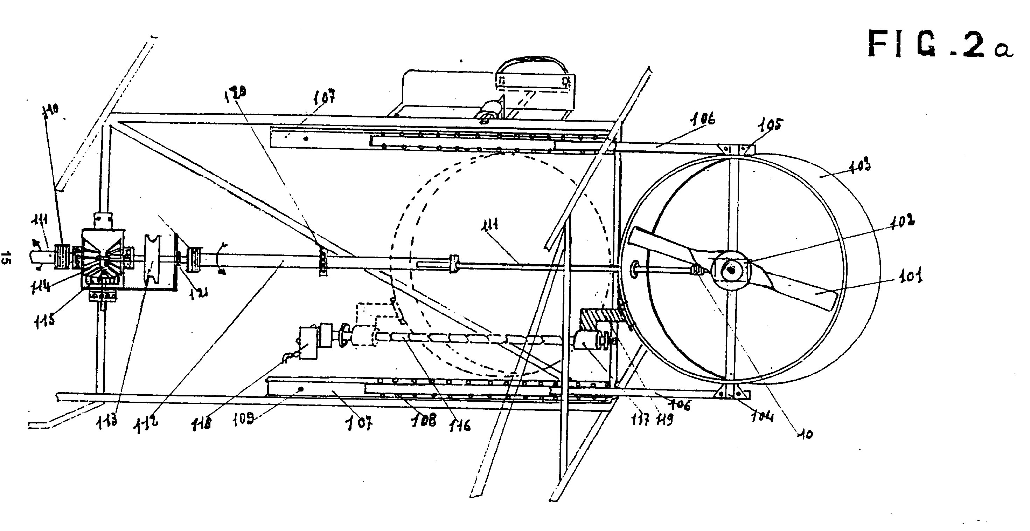

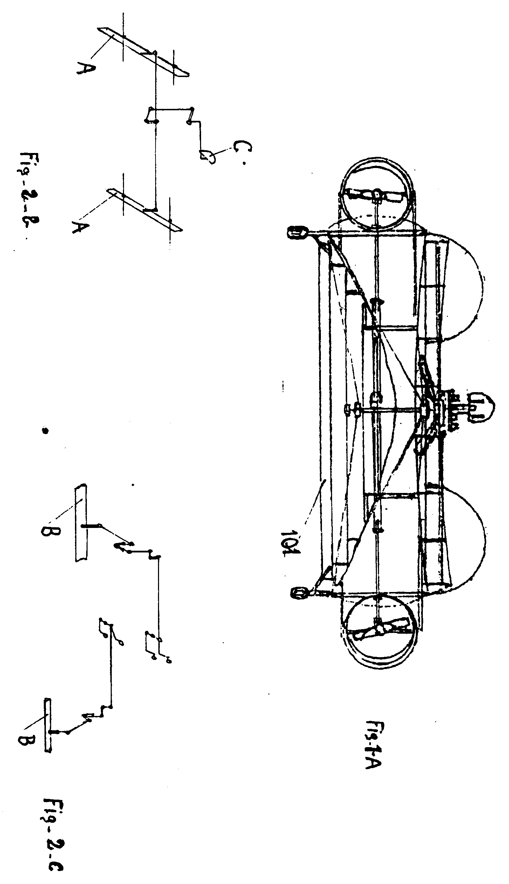

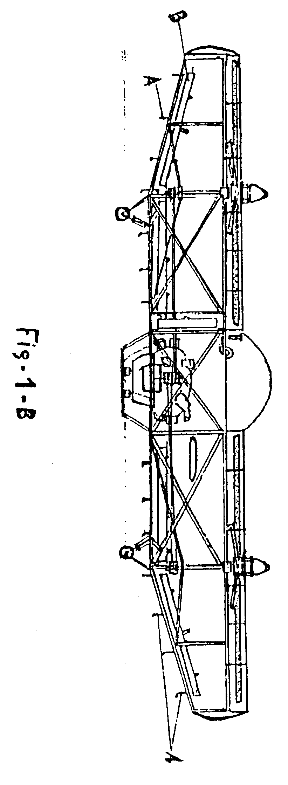

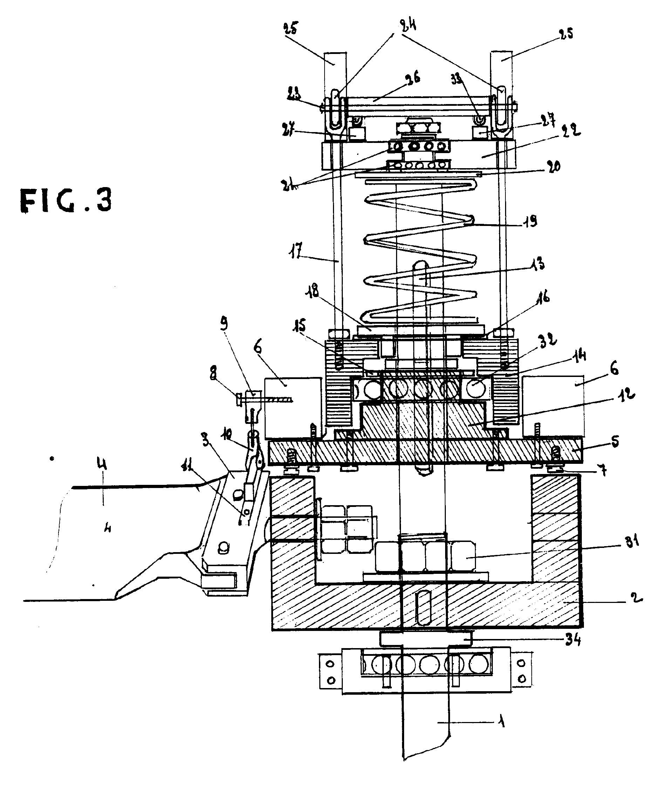

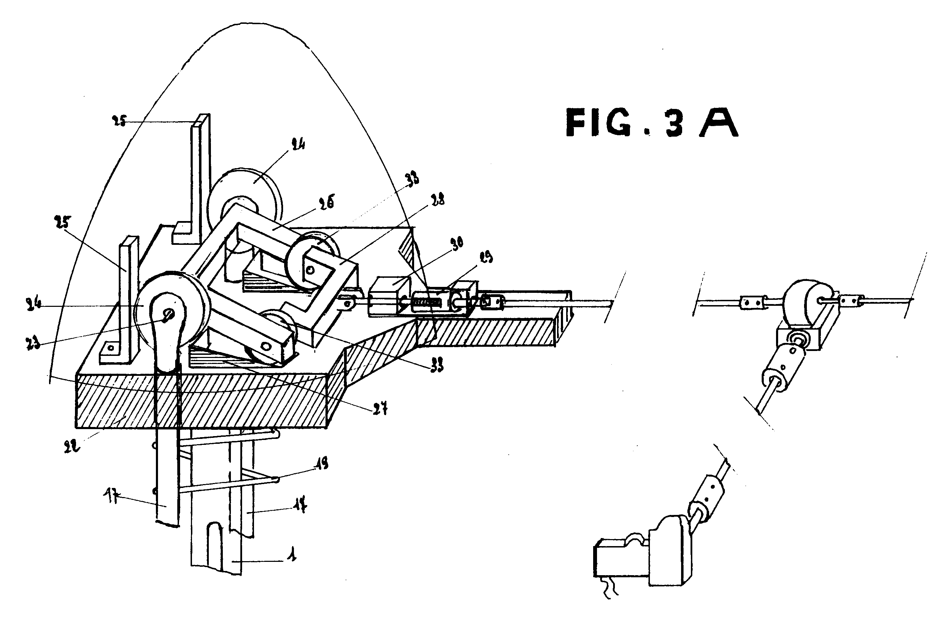

Les dessins annexés illustrent l'invention : la figure 1a représente l'ensemble de l'appareil, la figure 2a le système propulsif rétractable placé dans le chassis sur les côtés, la figure 1a représente l'appareil de face, les figures 2b et 2c représentent le système de commande des volets, la figure 1 B représente l'appareil de côté, la figure 3 représente la tête de commande d'ouverture de pas des pales, la figure 3 A représente la tête supérieure de commande électro-mécanique de variations de pas.

L'arbre principal vertical de 30 m/m de diamètre, 1 050 m/m de long est usiné pour recevoir l'ensemble du manchon qui reçoit les pales et le système électro-mécanique de fonctionnement.

Le deuxième arbre de la 2ème turbine est également identique.

Figure 3, l'arbre (1) placé verticalement, monté avec roulements et cages et fixés sur l'arbre de bas en haut, est maintenu par des tubes d'acier ultra léger de 21 m/m de diamètre.

Les cages possèdent chacune 6 oreilles d'attache qui sont reliées et fixées au tube d'acier par boulons puis fixé au chassis par soudures, Par ces fixations, l'arbre (1) est maintenu bien au centre du cercle de 2,78 mts qui reçoit à l'extrémité supérieure le manchon dural (2) qui reçoit les pales.

Ces 2 cages placées sur l'arbre (1) sont fixées par 6 tubes à la base du chassis et 6 tubes à la cage supérieure, fixés à la partie supérieure du chassis.

Le deuxième arbre de la 2ème turbine est placé et fixé dans son centre dans les mêmes conditions que le premier.

Au dessus du roulement est placé le manchon (2) principal en dural qui est usiné, d'un diamètre extérieur de 200 m/m, 100 m/m de hauteur et 30 m/m sur le fond.

Sur le fond des 30 m/m du manchon (2) est percé au centre, un trou de 28 m/m. Ce percement est canelé pour se fixer sur l'arbre (1) qui est, également canelé pour recevoir le manchon (2) qui ensuite est bloqué sur le fond, par une rondelle et écrou (31). L'arbre (1) a, à la base des rayures canelées, un épaulement circulaire qui reçoit le fond extérieur bien à plat du manchon (2).

L'épaulement circulaire (34) qui reçoit le fond du manchon (2) est de 60 m/m de diamètre et 8 m/m d'épaisseur. Cet épaulement est effectué lors de l'usinage de l'arbre principal (1).

Sur le côté circulaire et verticalement du manchon (2), se trouvent percés dans l'épaisseur des 30 m/m, 6 trous de 14,1 m/m de diamètre, ceux-ci se trouvant à 30 m/m du fond intérieur. Ces trous sont répartis à écartement égal autour du manchon (2).

Ces 6 trous percés dans les côtés du manchon (2) reçoivent chacun leur axe du pied de pale (3). Cet axe traverse l'épaisseur du manchon (2) pour être bloqué sur la partie filetée en bout de l'axe du manchon (3) par une rondelle d'épaisseur et deux écr'ous auto-bloquants. Le jeu étant respecté pour que l'axe du manchon (3) tourne librement dans son emplacement.

Sur le plateau (5) sont placées en dessous, faisant face au bord du manchon (2) 3 vis vissées et réparties en triangle qui règlent la hauteur des pales pour l'arrêt point zéro.

Sur le dessus du manchon (2) se trouve, coulissant sur l'arbre (1), le plateau (5) de 210 m/m qui reçoit les 6 supports (6) des charnières mobiles (9) et (10). Ces supports (6) sont fixés sur le plateau (5) par des boulons, partant du dessous du plateau (5) et vissés dans l'épaisseur du support dural (6).

Ces supports (6) de 40 m/m par 40 m/m et 20 m/m d'épaisseur sont placés au bord extérieur du plateau (5) coulissant.

Sur le haut des supports (6) en dural, à 10 m/m du haut, est percé un trou horizontal, ensuite taraudé, reçoit un axe avec tête qui se visse dans le trou horizontal. Cet axe reçoit le support (9), oscillant sur l'axe. Dans ce support (9) à la base, est percé un trou qui est taraudé en 6 m/m. Cet emplacement reçoit une tige filetée qui est bloquée dans le trou taraudé du support (9), le filetage dépassant de 35 m/m.

Faisant face, un autre support en dural (10) à 2 oreilles à sa base qui, ces oreilles, sont fixées sur l'oreille de la pièce (11). A l'opposé des oreilles de raccordement de la pièce (10), se trouve percé dans l'épaisseur, un trou qui est taraudé à 6 m/m qui reçoit le filetage extérieur de la pièce (9).

La tige filetée placée entre la pièce (9) et (10), permet de régler les pales (4) toutes à la même hauteur du bord d'attaque.

La pièce à oreilles (10) est fixée sur l'oreille de la pièce (11) par un axe transversal qui rend celle-ci articulée.

Le support (11) est fixé à sa base sur le pied du manchon de pale (3) par boulonnage partant par le dessous du manchon (3) et vissé dans l'épaisseur du support (11).

Ces pièces mobiles (9) (10) (11), montées pour l'articulation des pales, se mettent en mouvement dès l'impulsion de soulèvement du plateau (5).

L'explication du montage effectué sur une pale, est identique pour les 6 pales. Chaque pale (4) possède ce système d'ouverture. Ce montage est installé sur les 6 pales entourant le manchon (2) et le plateau (5).

Ce montage est aussi installé sur l'ensemble des 6 pales (4) de la deuxième turbine.

Toutes les pales (4) sont au même angle d'attaque. Les 6 pales avant et les 6 pales arrière, soit 12 pales (4) fonctionnent toutes en même temps, lors de l'ouverture ou fermeture du pas, effectuée par impulsion électro-mécanique sur la tête de commande qui est commandée par le pilote.

Le plateau (5) reçoit une pièce cylindrique usinée (12) avec, à sa base, une collerette taillée dans la masse et percée au centre. Cette collerette de 70 m/m de diamètre et 5 m/m d'épaisseur, est façonnée dans une pièce d'acier de 70 m/m de diamètre par 55 m/m de long.

Cette pièce façonnée, au diamètre de 70 m/m par 5 m/m d'épaisseur, est ensuite réduite au diamètre de 50 m/m et 50 m/m de long, la longueur restant après usinage. Celle-ci est percée au diamètre au centre de 28,4 m/m. L'arbre principal à cet endroit étant de 28 m/m.

Dans l'intérieur du diamètre de 28,4 m/m dans le sens de la longueur, sont effectuées deux rayures opposées, recevant le passage en glissement, des clavettes de l'arbre principal (1). Les clavettes de 8 m/m d'épaisseur au carré et 80 m/m de long, sont fixées dans l'arbre (1) de la moitié de l'épaisseur, en sens opposé l'une de l'autre, Les 4 m/m ressortant de l'axe glissent dans (13) les rayures intérieures du manchon (12).

Le manchon cylindrique (12) est fixé sur le dessus du plateau (5) par 3 vis partant du dessous du plateau (5), pour se visser dans l'épaisseur de la collerette (12).

L'ensemble des pièces (5) et (12) coulissent le long des clavettes et arbre principal (1), sur une hauteur de 35 m/m disponible pour l'ouverture des pales.

Sur le manchon cylindrique usiné (12) se trouve placé un roulement à billes sur l'extérieur de la pièce cylindrique (12). Celui-ci se trouve bloqué par une bague d'épaisseur (15) placée sur l'arbre (1).

Ce roulement en place sur la partie extérieure de 50 m/m de diamètre du manchon (12) tournant et coulissant, reçoit le manchon (14) dural usiné de 120 m/m de diamètre et 60 m/m de haut. Ce manchon (14) est creusé au centre sur 40 m/m, puis percé à la partie supérieure au diamètre 45 m/m. L'intérieur du manchon (14) reçoit le roulement qui est bloqué sur ses bords extérieurs, à l'intérieur et au fond du manchon (14).

Ce manchon (14) est fixe et ne tourne pas. Sur le dessus du manchon (14) est placée une contre plaque de protection fixée (16) par 3 boulons vissés.

Le manchon (14) fixe, est immobilisé par les 2 guides (17) coulissants, vissés sur le manchon (14), et remontent sur le plateau (22) supérieur qui est fixe.

Sur le dessus du manchon (14) qui est fixe, se trouve placée sur l'arbre principal (1), une collerette (18), usinée, de 80 m/m de diamètre sur 4 m/m d'épaisseur, percée au centre à 29 m/m. Cette collerette a, à son centre, une bague usinée, dans la fabrication de la pièce, de 6 m/m d'épaisseur. Ce rebord rentre dans la partie du haut du manchon (14). Le rebord de la collerette (18) appuie sur la bague (15). Cette collerette (18) reçoit la pression d'un ressort (19) taré, qui se trouve placé en pression entre la collerette (18) et la collerette (20) supérieure. Un espace de 2 m/m est entre le dessus de la contre-plaque (16) et la collerette (18).

Ce jeu d'espace de 2 m/m est nécessaire, le manchon (14) étant fixe et la collerette (18) qui elle, appuie sur la bague (15) qui, la bague appuie sur la bague de roulement qui est bloquée sur l'arbre principal (1).

La partie intérieure du roulement (32) qui est fixée sur la partie coulissante (12), tournent ensemble. L'extérieur du roulement (32) est fixé à l'intérieur du manchon (14).

Le centre du roulement (32) et le manchon (12) sont entrainés par les clavettes (13) de l'arbre (1). Le manchon (12) coulissant étant prisonnier par ses rayures, sur les clavettes (13) tourne et coulisse en même temps, entrainant, dès qu'il se lève ou se baisse, sous l'impulsion de la commande électro-mécanique, le plateau (5) où se trouvent toutes les fixations des 6 pales articulées.

Au dessus de la collerette (20) se trouve fixé le plateau (22), traversé à son centre, par le bout d'arbre d'extrémité de l'arbre principal (1). Ce bout d'arbre a, à son extrémité, 2 roulements superposés, logés dans l'épaisseur du plateau (22).

Ce plateau (22) en dural de 130 m/m de long, 110 m/m de large et 30 m/m d'épaisseur, reçoit également l'écrou de blocage fixé en bout d'arbre.

Sur le dessus du plateau (22) est placé le mécanisme d'ouverture et fermeture des pales (4).

Sur le plateau (22) passent de chaque côté, les 2 guides en dural de 10 m/m de diamètre, avec à l'extrémité deux oreilles sur chaque guide (17). Ces deux guides (17) filetés à la base, passent par les trous guides, pour venir se visser sur le dessus du manchon (14).

Sur le dessus du plateau (22), est placée, entre les oreilles de chacun des deux guides (17) en dural, une roulette (24) plastique qui est montée sur l'arbre (23) tranversale réunissant les 2 guides (17). Derrière les 2 roulettes (24) placées dans leur guide, est fixé, derrière les roulettes, un montant (25) en dural de 80 m/m de long, 20 m/m de large et 10 m/m d'épaisseur. Celui-ci est fixé au plateau (22) par vis (fig. 3 A).

Ces 2 montants (25), placés en contrefort derrière les roulettes, reçoivent ces roulettes montées sur les oreilles de guides (17). Ces roulettes, dès la poussée exercée, roulent le long des 2 montants. Ces montants, en contrefort, maintiennent toujours les 2 guides (17) en ligne, dès que les guides (17) se soulèvent.

Entre les 2 guides (17), est placé, sur l'axe des roulettes (24), un U façonné en dural de 80 m/m de long, avec bras de 40 m/m de long sur 20 m/m de large. Ce U (26) est percé au centre de sa longueur des 80 m/m et ensuite placé entre les roulettes (24), sur l'axe (23) de jonction des 2 guides (17).

A la base des 2 bras du U (26) de 40 m/m de long, est placée aux extrémités, une roulette (33) plastique qui est montée sur axe de 8 m/m de diamètre qui est vissé à la base du bras de 40 m/m.

Cet axe, vissé avec sa roulette, dépasse de 10 m/m l'épaisseur du bras de 20 m/m vers l'intérieur. Le deuxième axe du bras est identique.

Sur les deux bouts d'axes ressortant de 10 m/m de l'épaisseur du bras de la pièce en U (26), se trouve fixée une pièce en dural de forme U (28), façonnée dans la masse, avec un axe de 10 m/m de diamètre ressortant sur le centre de la largeur de la pièce.

Cette pièce (28) en forme de U, a 40 m/m de large avec l'axe de 60 m/m de long et 10 m/m de diamètre. Cet axe est fileté au pas sens droit. Les 2 bras se trouvant sur les côtés,de la largeur, font 40 m/m de long, l'ensemble de l'épaisseur de ce U est de 20 m/m.

Sur les 2 bras du U (28) de 40 m/m et 20 m/m d'épaisseur, se trouve, sur chaque bras, à leur base, un trou de diamètre 8 m/m.

Cette pièce en U (28) est placée entre les 2 bouts d'axes ressortant de sur les 2 bras de la pièce en U (26), où sont montées les 2 roulettes (33).

Les pièces de forme rectangulaire (27) de 60 m/m de long 15 m/m de large et 10 m/m de haut à une extrémité de la largeur, ont une coupe en biseau dans le sens de la longueur des 60 m/m, pour venir au point nul à l'autre extrémité.

Ces 2 pièces (27) sont placées devant les roulettes (33) sont fixées par vis sur le plateau (22).

Ces roulettes (33) montées sur le U (26) roulent sous la poussée exercée sur la pente des pièces (27).

La pièce (28) placée sur les 2 axes des roulettes (33), possède au centre de la longueur des 40 m/m, un axe de 60 m/m de long sur 10 m/m de diamètre. Cet axe est taraudé extérieurement au pas, sens droit.

Cet axe, taraudé de 10 m/m, reçoit le manchon (29) femelle de 60 m/m de long et 30 m/m de diamètre, taraudé intérieurement, au pas sens droit. Ce manchon (29) est enclavé dans un emplacement fabriqué en dural et fixé sur le plateau par vis. Cette fixation permet au manchon d'être mobile, permettant la rotation d'entrainement. Le manchon au montage est vissé de 55 m/m sur l'axe mâle de 10 m/m de diamètre.

Cette longueur de filetage vissée, est la longueur nécessaire au maintien de l'axe mâle et qui représente le point zéro d'ouverture des pales (4).

Le manchon (29) encastré sur son socle (30) reçoit à son extrémité un cardan façonné en dural. Ce cardan est relié par tringlerie de 6 m/m de diamètre, au renvoi central qui reçoit également la tringlerie de la tête de commande de la deuxième turbine à 6 pales.

Pour la tête de commande de la deuxième turbine, le mécanisme est identique à la première tête de commande de variations de pas.

Pour la commande de variation de pas, sur la tête de la deuxième turbine à 6 pales (4); le manchon (29) ainsi que l'axe mâle de 10 m/m de diamètre, est inversé de sens de pas et se trouve vissé à gauche.

Egalement la deuxième turbine à 6 pales (6) qui est parallèle à la première, possède la tête de commande de pas absolument identique à la première, sauf les pales (4) tournant en sens contraire de la première turbine. Ceci pour contrer le couple des pales.

La tringlerie qui commande le mécanisme d'ouverture et fermeture des pales, est fixée sur des guides qui sont placés sur le tube d'acier raccordant les plateaux (22) avant et arrière des têtes de commandes de variations du pas.

L'axe de sortie du renvoi central est raccordé par une tringlerie, réunissant le renvoi au cardan du réducteur qui se trouve sur le moteur électrique 12 volts.

La marche du moteur électrique 12 volts est commandée par le pilote qui a l'interrupteur inverseur à sa portée de main. L'interrupteur est fixé sur le tableau de contrôle se trouvant devant le pilote.

Cet interrupteur fait inverseur de tension et inverse la rotation de marche du moteur.

Par ce procédé et ce montage mécanique, l'ouverture des 12 pales (4) représentant les 2 turbines à 6 pales chacune, se fait en 14 secondes.

Un cône sphérique en aluminium de 150 m/m de diamètre et 150 m/m de haut, coiffe et protège le système mécanique d'ouverture du pas. Ce cône est fixé sur le plateau (22). La deuxième tête de la deuxième turbine a également son cône de protection fixé sur le plateau (22).

Sur les 2 plateaux (22) placés en haut d'arbre principal, en plus du raccordement réunissant par tube d'acier les 2 plateaux ensemble, une seconde fixation est fixée sur les devants des 2 plateaux. Ces tubes d'acier de 21 m/m de diamètre ultra léger, sont fixés par soudures sur le chassis et au centre du devant des 2 plateaux par boulonnage dans l'épaisseur de la pièce.

Le fonctionnement de la tête de commande de pas des pales (4) des 2 turbines.

Le mécanisme de la tête de commande de la première turbine avant et le mécanisme de la tête de commande de la deuxième turbine arrière est identique. Les 2 commandes partant des manchons (29) sont jumelées sur le même arbre d'ouverture commandé par le moteur réducteur électrique 12 volts. Ce moteur réducteur se trouve dans la cabine de pilotage, avec commande d'inverseur de sens. Actionné par le pilote, celui-ci fait l'ouverture ou fermeture du pas des pales (4).

Essai : (la commande d'orientation des pales peut se faire sans que le moteur central soit en marche. Le moteur électrique 12 volts est branché en direct sur la batterie, donc indépendant).

Le fonctionnement s'établit ainsi : le moteur réducteur électrique étant en marche par l'interrupteur, celui-ci commande la tringlerie par renvoi et sur les manchons (29) (sur les têtes de commande) qui tourne et pousse la pièce (28) qui elle, pousse la pièce (26) qui possède des roulettes sur ses bras. Ces roulettes roulent sur la pièce triangulaire (27). La pièce (26) en U est fixée sur l'axe (23) et sur les guides (17) avec leurs roulettes (24). Celle-ci roule en remontant le long de la pièce en contrefort (25). Les guides (17) se soulèvent et remontent le manchon (14).

Les parties fixes s'arrêtent au manchon (14). Les autres pièces sous ce manchon tournent avec l'ensemble.

Sous le manchon (14) est fixée par le roulement, la pièce (12) et bloquée par écrou. Ce manchon (12) qui est entraîné par l'arbre principal (1), tourne dans l'intérieur du manchon (14).

Ce manchon (12) auquel est fixé le plateau (5) avec les supports (6) fixée sur le dessus, entraine l'ensemble de pièces charnières (9) (10) (11) qui s'articulent et orientent les pales (4).

Le moteur central étant en marche, l'ouverture des pales (4) pour la subtantation de l'appareil, se fait dès le nombre de tours moteur acquit au compte tours. Le système électromécanique expliqué, fonctionne parfaitement, comme expliqué.

L'ouverture du pas des pales (4) se fait en 14 secondes dès le système électro-mécanique en marche.

Pour la remise au pas nul des 12 pales (4), 6 sur la turbine avant et 6 sur la turbine arrière, la manoeuvre consiste à inverser le sens de rotation du moteur électrique, pour que l'ensemble revienne à son point nul se reposer sur les vis (7).

Selon la figure 2a, les hélices propulsives (101) avec carénage (103) sont montées et fixées de bas en haut sur des rails (107) sur coulissants à billes (108).

Sur les rails centraux du coulisrail fixe (107) qui ressortent vers l'extérieur du chassis, un tube d'acier (104) de carénage réunit les deux rails (106) au tube coulissant. Ce tube est fixé sur plaque d'acier par soudures et ensuite fixé sur les rails (106) par boulons.

Pour sortir l'hélice (101), il suffit que le pilote mette l'interrupteur placé sur le volant de commande, en contact pour que l'hélice, par l'intermédiaire du moteur réducteur électrique (118) et la vis (116), sorte de son emplacement.

Chaque système de sortie d'hélice possède son interrupteur de marche, car indépendantes l'une de l'autre.

Pour la sortie, le moteur réducteur électrique (118) tourne la vis (116) tourne et entraîne le manchon (117) qui est monté sur billes intérieurement. Ce manchon (117) possède une patte qui est reliée au carénage (103). Sous la pression de la vis (116), l'hélice (101) et carénage (103) roulent sur les rails (107) et sort l'hélice de son diamètre extérieurement. Une butée se trouve au bord des rails fixe qui arrête les rails aux tubes coulissants (106).

Pour faire rentrer les hélices à l'intérieur, il suffit d'inverser les sens d'arrivée de courant au moteur (118) qui revient en arrière et par l'intermédiaire de la vis (116) tige à pas hélicoïdal, rentre l'ensemble de l'hélice à l'intérieur de l'appareil.

Les sorties ou rentrées des hélices (101) droite ou gauche, peuvent être stoppées par l'arrêt du moteur électrique, et repartir ensuite.

Les hélices sont fixées chacune sur leur axe de sortie du boitier de renvoi d'angle à 90°. A l'autre partie de l'axe sortant du boitier, se trouve fixé un flector métallique (110) qui reçoit l'arbre mâle (111) coulissant dans l'arbre femelle (112) lui même entraîné par le moteur arbre (112) est raccordé sur le boitier central avec pignons (114-115), et placé entre les deux hélices. Ce boitier est fixé au chassis par boulonnage.

Les arbres (111) et (112) se trouvant de chaque côté du boitier central, sont entraînés par la poulie (113) à gorge qui elle, reçoit une courroie trapézoïdale. Cette courroie est branchée directement sur la poulie avant de la sortie avant moteur central.

Cette poulie (113) entraîne les deux pignons (114), dont un tourne en sens contraire par l'intermédiaire du pignon (115).

Les arbres femelles (112) reçoivent,un roulement (120) de fixation et maintien l'axe qui est fixé sur un montant du bâti chassis.

Le fonctionnement et la marche de l'appareil :

L'appareil dès la mise en marche du moteur central, fait tourner les 2 hélices propulsives dans leurs emplacements, dans l'intérieur de l'appareil. Ces hélices étant renfermées, sont inefficaces à la propulsion.

Le moteur central étant en marche et tournant à son régime, le pilote embraye, par le levier se trouvant à sa portée les deux turbines sustentatrices qui sont au point zéro d'ouverture.

Le pilote, par impulsion sur l'interrupteur électrique placé sur le volant des commandes, ouvre le pas des 2 voilures tournantes carénées dans on diamètre de 2,78 m. Les 2 turbines à 6 pales chacune, d'une surface par pale de 0,220 m² et soit pour les 6 pales par turbine de 1,320 m² par turbine sur 2,70 m de diamètre, balayé à 1 200 T/mn. La surface balayée pour l es deux turbines étant de 2,640 m².

Dès l'ouverture des pales, l'appareil s'élève verticalement au dessus du sol.

Pour l'avancement de l'appareil, les volets qui se trouvent avant et arrière, sous l'éjection de l'air des turbines, sont orientés à 45° vers l'arrière. L'air soufflé partant vers l'arrière fait avancer l'appareil.

Sous les pales, l'oscillation des volets fixés à la base du chassis, ne change pas la sustentation de l'appareil, qui n'est gêné par aucun freinage. La poussée de l'air dégagé par les turbines est orientée d'avant en arrière ou de gauche à droite et vice-versa.

En vol, les stabilisateurs placés sur les côtés extérieurs de l'appareil, sont sortis et réglés par le pilote, pour la stabilité de l'appareil.

La manoeuvre directionnelle de l'appareil se fait par l es volets placés transversalement qui font orienter l'appareil par le devant ou par l'arrière, par l'orientation de ces volets. La commande se fait en tournant le volant de commande, placé sur le tableau de contrôle de l'appareil, de droite à gauche et gauche à droite. L'ensemble de l'appareil glisse latéralement, suivant l'orientation des volets.

Les pédales à double effet, placées au plancher dans la cabine de pilotage, agissent individuellement, soit sur les volets avant, soit sur les volets arrière, mais que sur les volets transversaux (Fig. 2 b - fig. 2 c).

Pour accentuer la vitesse de l'appareil, les hélices (101) logées dans l'épaisseur du chaissis, sortent ensemble de leurs rails sous l'impulsion des moteurs électriques.

La manoeuvre de l'appareil s'effectuant par les volets transversaux, sous les turbines, et par la rentrée ou sortie réglables des hélices propulsives (101).

Le fonctionnement par l'utilité du rôle du volant de commande, placé sous le tableau de contrôle et des pédales à double effet, fixées au plancher de la cabine.

Dès l'appareil en sustentation, pour faire avancer l'appareil, on tire sur le volant, placé sur un guide coulissant fixé sous le tableau de contrôle qui oriente devant et arrière les volets (A) transversaux. L'appareil avance car les volets (A) orientés à 45° dirigent l'air vers l'arrière, donc en poussée. Pour faire reculer l'appareil, on pousse le volant et les volets (A) s'orientent en sens contraire de la poussée avant.

Une vis de blocage manuelle bloque le cas échéant et si nécessaire, la commande du volant (C).

Pour aller latéralement à droite, on tourne le volant à droite et les 12 volets (B) installés latéralement en avant et arrière, s'orientent vers la gauche et la poussée de dégagement pousse l'appareil vers la droite. Pour aller à gauche, inverser le sens de rotation du volant et les volets (B) s'orientent en sens contraire.

Pour orienter l'avant de l'appareil vers la droite, la commande se fait à la droite sur la pédale à double effet, basculant les volets (B) à gauche. Pour orienter l'avant de l'appareil :

L'avancement de l'appareil s'effectue en tirant sur le volant, placé sous le tableau de contrôle dans le poste de pilotage. Ce volant est raccordé aux volets (A) par tringles et renvoi fixés sur les volets. Le volant tiré, les volets (A) sont inclinés vers l'arrière et l'air propulsé par les pales est rejeté vers l'arrière et l'appareil avance.

Pour faire reculer l'appareil, pousser sur le volant, le sens des volets est inversé et l'appareil recule.

Pour la manoeuvre directionnelle de l'appareil, elle se fait par les 6 + 6 volets (B) placés perpendiculairement en sens longitudinal qui font orienter l'appareil de par devant ou de par derrière par l'orientation des volets (B).

Les pédales à double effet, commandent les volets. Ces pédales à double effet, pivotent sur un axe central et agissent par la tringlerie sur l'orientation des volets à gauche ou droite.

Pour accentuer la vitesse de l'appareil, les hélices propulsives (101) logées dans l'épaisseur du chaissis, sortent ensemble de leur rails coulissants, sous l'impulsion des moteurs réducteurs électriques.

La manoeuvre de l'appareil s'effectue par les volets transversaux (B) placésplacés sous les turbines et aussi par la rentrée ou la sortie réglables des hélices propulsives (101).

Pour orienter l'avant de l'appareil vers la droite, la commande se fait à la droite de la pédale qui articule le renvoi, qui bascule le bras fixé sur la place centrale. Pour orienter l'avant de l'appareil vers la gauche, appuyer sur la partie gauche de la double pédale de droite, l'avant va vers la gauche, les volets étant orientés vers la droite.

Les pédales placées au plancher de la cabine, sont fixées sur axes qui eux, sont fixés sur le chassis. Ces axes reçoivent un bras articulé qui reçoit de chaque côté de ces bras et espacées de 100 m/m une pédale de chaque côté. Ces pédales doubles sont fixées sur la tringlerie de commandes d'orientation des volets (B) Fig. 2 b - Fig. 2 c, dessin explicatif.

La pédale à droite à double effet, commande les volets (B) sous la turbine avant.

La pédale à gauche à double effet, commande les volets (B) sous la turbine arrière.

Avec ces montages, l'appareil peut atterrir juste sa surface dans un emplacement de 7 m par 3 m, sans aucun danger.

## Revendications

1. Appareil volant à carénage rectangulaire à embouts circulaires comportant à chacune de ses extrémités une hélice à axe vertical munie d'une pluralité de pales (4) à pas variable, orientables sous l'action d'un mécanisme électromagnétique, hélices destinées à assurer la sustentation de l'appareil en soufflant de l'air verticalement vers le bas en direction d'une série de volets orientés dans le sens longitudinal et dans le sens transversal de l'appareil, volets qui sont eux-mêmes manoeuvrables par transmission mécanique à partir de la cabine de pilotage, lequel appareil comportant également un moteur pour l'entrainement des deux hélices, caractérisé en ce que deux autres hélices carénées à pas fixe (101) et à axe horizontal parallèle à l'axe longitudinal de l'appareil sont montées de part et d'autre de celui-ci et sensiblement en son milieu et sont entrainées en rotation également par le moteur d'entrainement des hélices de sustentation à axe vertical et en ce que les dites hélices carénées à axe horizontal sont montées coulissantes dans un dispositif (106-107) à double rail à déplacement latéral par rapport à l'appareil volant et qui sont rétractables à l'intérieur de l'appareil, séparément ou simultanément.

2. Appareil selon la revendication 1, caractérisé en ce que le carénage (103) de chaque hélice (101) est solidaire de tubes (106) coulissant dans ces rails fixes (107) intégrés dans le chassis de l'appareil, grâce à des roulements à billes (108) et en ce que un arbre d'entrainement (111) de ladite hélice, coulisse en même temps à l'intérieur d'un arbre mâle (112) lui-même entrainé par le moteur.

3. Appareil selon les revendications 1 et 2, caractérisé en ce que un moteur réducteur électrique (118) actionne indépendamment et dans les deux sens de rotation une tige filetée (116) qui entraine le déplacement de l'hélice carénée (101) dans le sens de sa sortie hors de l'appareil ou de sa rentrée à l'intérieur de l'appareil.

4. Appareil selon la revendication 3, caractérisé en ce que la tige (116) à pas hélicoïdal, reçoit le manchon (117) coulissant, qui lui est solidaire du carénage (103) de l'hélice (101), le carénage (103) étant solidaire des rails (106 et 107) à déplacement latéral.

5. Appareil selon la revendication 2, caractérisé en ce que le moteur d'entrainement des hélices agit sur l'arbre (112) par l'intermédidiare d'un boitier central (114, 115) de distribution du mouvement.

6. Appareil selon la revendication 1, caractérisé en ce que l'axe vertical de chaque hélice de sustentation entrainé, ainsi que les pales (101) à pas fixe, par le moteur d'entrainement, porte un manchon (2) non coulissant supportant la pluralité des pales (4) à pas variable et un plateau (5) coulissant sur ledit axe, sous l'action de manchons déplaçables (12, 14), pour modifier le pas des pales.

7. Appareil selon la revendication 6, caractérisé en ce que le plateau coulissant (5) coopère avec les pieds de chaque pale (4) des hélices de sustentation par l'intermédiaire de charnières mobiles (9, 10).

8. Appareil selon les revendications 1 et 6, caractérisé en ce que le manchon déplaçable (14) coulisse avec des guides (17) dans un plateau fixe (22) sous l'action d'un mécanisme (27, 28) assurant son déglacement à l'encontre de la force de rappel d'un ressort (19).

9. Appareil selon la revendication 8, caractérisé en ce que le mécanisme d'entrainement est constitué d'une pièce en forme de U déplaçable transversalement, qui supporte les guides (17) ainsi qu'un jeu de roulettes (33) coopérant avec des cames biseautées (27).

## Patentansprüche

1. Flugapparat mit rechteckiger Verkleidungen und kreisrunden Aufsätzen, die jeweils an ihren Enden eine Luftschraube mit vertikaler Achse haben, ausgerüstet mit mehreren Blättern (4) mit variabler Steigung und einstellbar durch Einwirkung einer Elektromechanik, diese Luftschrauben zum Zwecke den Auftrieb des Apparates sicherzustellen, indem die Luft vertikal nach unten geblasen wird in Richtung einer Serie von Flügelklappen, die in Längsrichtung und in Querrichtung des Apparates angeordnet sind, Flügelklappen, die selbst einstellbar sind durch mechanische Übertragung von der Pilotenkabine aus, wobei dieser Apparat zudem einen Motor für den Antrieb der beiden Luftschrauben hat, **dadurch gekennzeichnet,** daß zwei andere aerodynamisch verkleidete Luftschrauben mit fester Steigung (101) und horizontaler Achse beidseitig parallel zur Längsachse des Apparates montiert sind auf der sind und vorzugsweise in seiner Mitte und die ebenfalls in Rotation versetzt sind durch den Antriebsmotor der Auttriebs-Luftschrauben mit vertikaler Achse und daß die genannten aerodynamisch verkleideten Luftschrauben mit horizontaler Achse verschiebbar sind in einer Anordnung (106-107) mit doppelter Schiene zur seitlichen Verschiebung in Bezug auf den Flugapparat und die einziehbar in das Innere des Apparates sind, getrennt oder gleichzeitig.

2. A Apparat nach Anspruch 1, dadurch gekennzeichnet, daß die Verkleidung (103) jeder Luftschraube (101) aus **einem** Rohrstück besteht, das in diesen festen Schienen, die in das Chassis des Apparates integriert sind, mittels Kugellager (108) verschieblich sind und daß eine Antriebswelle (111) der besagten Luftschraube, zugleich im Innern einer Primärwelle (Arbre male) (112) verschieblich ist, die selbst vom Motor angetrieben ist.

3. Apparat gemäß der Ansprüche 1 und 2, gekennzeichnet dadurch, daßein elektrischer Getriebemotor (118) unabhängig und in beiden Drehrichtungeneine Gewindespindel (116) antreibt, die das Aus- oder Einfahren der verkleideten Luftschrauben (101) aus dem Apparat oder in den Apparat bewirkt.

4. Apparat gemäß Anspruch 3 dadurch gekennzeichnet daß die Spindel (116) mit Gewindesteigung eine Gleitmanschette erhält, welche mit der Verkleidung (103) der Luftschraube (101) ein Stück bildet und mit der Verkleidung (103), die mit den Schienen (106 und 107) zur seitlichen Verschiebung ein Stück bildet.

5. Apparat gemäß dem Anspruch 2 dadurch gekennzeichnet, daß der Motor für den Antrieb der Luftschrauben auf die Welle (112) über die Zwischenschaltung eines zentralen Einheit (Gehäuse) (114,115) zur Verteilungt des Antriebes wirkt.

6. Apparat gemäß Anspruch 1 dadurch gekennzeichnet, daß die vertikale Achse jeder Auftriebs-Luftschraube, die ebenso wie die Blätter (101) mit fester Steigung durch den Antriebsmotor angetrieben sind, eine Manschette (2) trägt, die nicht verschieblich ist und die die Mehrzahl der Blätter (4) mit variabler Steigung trägt und eine Scheibe (5) die auf der besagten Achse verschieblich ist, unter der Einwirkung von verschiebbaren (oder mitlaufenden bzw. mitdrehend ?) Manschetten (12, 14), um die Steigung der Blätter zu verändern.

7. Apparat gemäß Anspruch 6, gekennzeichnet dadurch, daß die verschiebliche Scheibe (5) mit dem Fuß jedes Blattes (4) der Luftschrauben für den Auftrieb unter Zwischenschaltung beweglicher Scharniere zusammenarbeitet (9, 10).

8. Apparat gemäß den Ansprüchen 1 und 6, dadurch gekennzeichnet daß die verschiebbare Manschette (14) mit Führungen (17) in einer feststehenden Scheibe (22) gleitet unter der Einwirkung einer mechanischen Einrichtung (27, 28) und womit die Verschiebung entgegen der Rückstellkraft einer Feder (19) sichergestellt ist.

9. Apparat gemäß Anspruch 8, **dadurch gekennzeichnet** daß der Antriebsmechanismus aus einem U-förmigen Stück besteht, das in Querrichtung verschieblich ist und das Führungen (17) hat, sowie einen Rollensatz (33), der mit angeschliffenenen Nocken (27) zusammenarbeitet.

## Claims

1. Flying machine with rectangular fairings with circular attachments to each end of which a propeller with a vertical axis has been fixed. The propeller is equipped with several blades (4) of variable pitch being operated by an electromagnetic system. These propellers serve for lifting the flying machine by vertically blowing the air to the bottom toward a number of longitudinally and transversally arranged flaps. These flaps are operated from the cockpit via a transmission mechanism. The flying machine is also equipped with a drive motor for the propllers being characterized by the fact that two other faired fixed-pitch propellers (101) with horizontal axes are mounted bilaterally parallel to the center of the longitudinal axis of the flying machine. Rotation of these propellers is also by the drive motor for the vertical-axis lifting propellers. The faired horizontal-axis propellers are displaceably mounted on a device (106-107) with double rails for lateral displacement with reference to the flying machine. They are also rectractable into the interior of the machine, either separately or simultaneously.

2. Machine according to claim 1, characterized by the fact that the fairings (103) of each propeller (101) are made of one tube (106) which by means of roller bearings (108) are displaceable on the fixed rails being integrated into the frame of the flying machine and that the driving shaft (111) of the said propeller at the same time is sliding inside a primary shaft (112) which is driven by the motor.

3. Machine according to claims 1 and 2, characterized by the fact that an electric drive motor (118) is independently driving a screwed spindle (116) (both directions of totation) which is actuating retraction and extension of the faired propellers (101).

4. Machine according to claim 3, characterized by the fact that the screw-pitch spindle (116) will be equipped with a sliding cuff (117) which forms one part with the fairing (103) which forms one part with the rails (106 and 107) for lateral displacement.

5. Machine according to claim 2, characterized by the fact that the propeller driving motor is acting upon the shaft (112) via a central casing (114, 115) for movement distribution.

6. Machine according to claim 1, characterized by the fact that the vertical axis of each lifting propeller, being driven by the drive motor (and so are the fixed-pitch blades (101)) is equipped with a non-sliding cuff (2) which supports the majority of the variable-pitch blades (4) and a disk (5) being displaceable on the said axis due to the action of displaceable cuffs (12,14) in order to change the pitch of the blades.

7. Machine according to claim 6, characterized by the fact that the sliding disk (5) is acting together with the blade shanks (4) of the lifting propellers via movable hinges (9,10).

8. Machine according to claims 1 and 6, characterized by the fact that the displaceable sliding cuff (14) is actuated by a mechanical device (27, 28) in order to slide onto a fixed disk (22) by means of guides (17) and to assure its displacement, counteracting the restoring force of a spring (19).

9. Machine according to claim 8, characterized by the fact that the driving mechanism is made of one transversally displaceable U piece which supports the guides (17) and a set of rollers (33) acting together with grinded cams (27).

FIG.1

FIG.2a

Fig-2-c.

Fig.1-A

Fig.2-c

Fig-1-B

FIG.3

**FIG. 3 A**

EP 0 418 218 B1